# EUROPÄISCHE PATENTANMELDUNG

(11) **EP 2 688 274 A1**
(43) Veröffentlichungstag der Anmeldung: **22.01.2014**
(21) Anmeldenummer: 12176937.6
(22) Anmeldetag: 18.07.2012
(51) Int. Cl.: H04M 1/725, G08B 17/10, G08B 17/12

(54) **Mobiles Kommunikationsendgerät mit einer darauf ausführbaren Brandmelder-Applikation sowie eine von einem Online-Internet-Verkaufsportal herunterladbare Brandmelder-Applikation**

(71) Anmelder: Siemens Aktiengesellschaft, 80333 München (DE)
(72) Erfinder: Fischer, Martin, 8180 Bülach (CH)

(57) **Zusammenfassung**

Die Erfindung betrifft ein tragbares mobiles Kommunikationsendgerät (1), insbesondere ein Smartphone oder Medienabspielgerät. Es weist eine Kamera (2), eine Ausgabeeinheit (3, 4, 5), einen Datenspeicher (6) und einen damit verbundenen Prozessor (7) auf. Der Datenspeicher ist unter anderem zum Speichern von Applikationen (APP) vorgesehen. Die Applikationen werden durch den Prozessor geladen und ausgeführt. Erfindungsgemäss ist im Datenspeicher eine Brandmelder-Applikation (FIRE-APP) gespeichert, welche auf eine Benutzeranforderung hin vom Prozessor geladen und ausgeführt wird. Die Brandmelder-Applikation weist geeignete Programmschritte auf, um die von der Kamera erfassten Videobilddaten hinsichtlich zumindest einer für Feuer charakteristischen Information zu analysieren und bei Vorliegen derselben einen Alarm (AL) über die Ausgabeeinheit auszugeben. Die Erfindung betrifft weiterhin eine von einem Online-Internet-Verkaufsportal für Computerprogramme herunterladbare und zum Ausführen auf einem tragbaren mobilen Kommunikationsendgerät bestimmte Brandmelder-Applikation, insbesondere zum Ausführen auf einem Smartphone oder auf einem Medienabspielgerät.

## Beschreibung

Die Erfindung betrifft ein tragbares mobiles Kommunikationsendgerät, insbesondere ein Smartphone oder ein Medienabspielgerät. Derartige Geräte weisen eine Digitalkamera, eine Ausgabeeinheit, einen Datenspeicher und einen damit verbundenen Prozessor auf. Der Datenspeicher ist u.a. zum Speichern von Applikationen vorgesehen. Letztere können durch den Prozessor geladen und ausgeführt werden.

Weiterhin betrifft die Erfindung eine von einem Online-Internet-Verkaufsportal für Computerprogramme herunterladbare und zum Ausführen auf einem tragbaren mobilen Kommunikationsendgerät bestimmte Brandmelder-Applikation, insbesondere zum Ausführen auf einem Smartphone oder Medienabspielgerät.

Tragbare mobile Kommunikationsendgeräte sind allgemein bekannt. Bei ihnen kann es sich um ein Smartphone handeln, wie z.B. um die iPhone-Serie der Fa. Apple, um die Galaxy-Serie der Fa. Samsung oder um die Lumia-Serie der Fa. Nokia. Derartige Kommunikationsendgeräte werden auch als Mobiltelefone oder als Handy bezeichnet. Bei den tragbaren mobilen Kommunikationsendgeräten kann es sich auch um sogenannte Tablet-Computer bzw. Tablet-PCs handeln, wie z.B. um ein iPad von der Fa. Apple oder um ein Galaxy Tab von der Fa. Samsung handeln. Weiterhin kann es sich bei den Kommunikationsendgeräten um mobile Mediaplayer handeln, wie z.B. um die iPod touch-Serie der Fa. Apple oder um die Yepp-Serie der Fa. Samsung. Diese Geräte werden auch als PMP für Portable Media Player bezeichnet. Die eingangs genannten tragbaren mobilen Kommunikationsendgeräte der Fa. Apple basieren typischerweise auf einem iOS-Betriebssystem, die Geräte der Fa. Samsung auf einem Android-Betriebssystem und die Geräte der Firma Nokia auf einem Windows Phone-Betriebssystem.

Aus dem Stand der Technik sind weiterhin Brandmelder bekannt, die auch als (automatische) Feuermelder bezeichnet werden. Sie sind zur Detektion von offenem Feuer und/oder von Rauch eingerichtet und werden daher auch als Flammenmelder oder als Rauchmelder bezeichnet. Solche Brandmelder sind typischerweise als Punktmelder zur Anbringung an der Decke ausgebildet.

Flammenmelder der obengenannten Art sind zur Detektion von offenem Feuer mit seinen charakteristischen modulierten Emissionen, wie z.B. mittels einer sogenannten Wavelet-Analyse oder einer Fourieranalyse, sowie zum Ausgeben eines Alarms in typischerweise weniger als einer Sekunde vorgesehen. Sie sind hinsichtlich der Signalverarbeitung auf die charakteristischen Flackerfrequenzen von offenem Feuer, das heisst von Flammen und lodernder Glut, im Infrarotbereich und gegebenenfalls im sichtbaren und ultravioletten Bereich abgestimmt. Die optische Erfassung des offenen Feuers kann z.B. mittels einer Videokamera oder mittels geeigneter Strahlungsdetektoren, wie z.B. mittels IR-Photodetektoren, erfolgen.

In der EP 1 762 995 A1 ist ein Verfahren und eine Vorrichtung zur Detektion von Rauch durch Analyse von Videobildern beschrieben, die mittels einer Videokamera aufgenommen werden. Es werden hierzu die Intensitätswerte der einzelnen Pixel in aufeinander folgenden Videobildern auf das Auftreten von Rauch hin miteinander verglichen. Wenn Intensitätswerte gemessen werden, die für ein helleres, durch die Anwesenheit von Rauch verursachtes Bild repräsentativ sind, wird auf das Vorhandensein von Rauch geschlossen und Alarm ausgelöst. Hierbei werden die Bewegungsrichtung, die Bewegungsgeschwindigkeit, die Grösse sowie die Ausbreitungsgeschwindigkeit von Rauch ermittelt, indem z.B. die Anzahl von Pixeln mit hohem Intensitätswert und deren Änderung rechnerisch ermittelt. Grundsätzlich kann nach Ermittlung eines wahrscheinlichen Vorliegens von Rauch in dem sich bewegenden Bereich dann der relevante Videobildbereich auf für Rauch charakteristische Informationen untersucht werden. Als letztere werden die Bewegungsrichtung und die Geschwindigkeit des Rauches, die Anzahl der Pixel im Videobild, die diese Bewegung beschreiben, die Helligkeitsänderung sowie die Änderung der Farbe des bewegten Rauchs angesehen.

Erfindungsgemäss ist im Datenspeicher von den eingangs genannten kameragestützten tragbaren mobilen Kommunikationsendgeräten nun eine Brandmelder-Applikation gespeichert, welche auf eine Benutzeranforderung hin vom Prozessor geladen und ausgeführt wird. Die Brandmelder-Applikation weist geeignete Programmschritte auf, um die von der Digitalkamera erfassten Videobilddaten hinsichtlich zumindest einer für Feuer charakteristischen Information zu analysieren und bei Vorliegen derselben einen Alarm über die optische und/oder akustische Ausgabeeinheit auszugeben. Dabei kommt heutigen tragbaren mobilen Kommunikationsendgeräten zugute, dass durch die verfügbare hohe Rechenleistung auch aufwändige und somit sehr zuverlässige Videoanalysen möglich sind.

Dadurch ist vorteilhaft eine Brandüberwachung eines Raumes durch eine Videoanalyse möglich. Ein Benutzer braucht hierzu lediglich die Brandmelder-Applikation auszuwählen, zu starten und die Digitalkamera des Kommunikationsendgerätes auf den zu überwachenden Raumbereich auszurichten. Im einfachsten Fall wird das Kommunikationsendgerät, wie z.B. ein Smartphone, an eine Wand oder einen Gegenstand, wie z.B. an ein Buch, angelehnt. In einem Brandfall, also bei erfolgter Detektion von Rauch und/oder von offenem Feuer, wird der Benutzer alarmiert. Dies kann über einen geeigneten Alarmton oder über eine Sprachmeldung mittels eines Lautsprechers des Kommunikationsendgerätes und/oder optisch erfolgen, wie z.B. durch ein blitzendes Ansteuern der für die Digitalkamera vorgesehenen weissleuchtenden LED.

Die Alarmmeldung kann auch über eine Funkdatenschnittstelle des Kommunikationsendgerätes in Form einer Textnachricht, insbesondere als sogenannte SMS, an eine vorgegebene Telefonnummer ausgegeben werden. Sie kann z.B. die Textnachricht "Feueralarm" oder "Brandalarm" enthalten.

Natürlich kann die Brandmelder-Applikation auch Programmschritte aufweisen, welche bei Detektion eines Brandes mittels der zur Brandüberwachung vorgesehenen Digitalkamera auch ein Foto und/oder eine Videosequenz aufnehmen lässt. Dieses Foto und/oder diese Videosequenz können dann im Kommunikationsendgerät gespeichert werden und/oder über die Funkdatenschnittstelle an eine vorbestimmte Gegenstelle übertragen werden. Das Foto kann z.B. mittels einer MMS (für Multimedia Messaging Service) an ein anderes Kommunikationsendgerät übertragen werden. Es kann alternativ - wie auch die Videosequenz - als Email mit Fotoanhang an ein vorbestimmtes Email-Konto übertragen werden. Die Videosequenz kann auch über weitere Kommunikationsapplikationen wie z.B. über "Whatsapp" oder "Skype" an einen anderen vorbestimmten Teilnehmer übertragen werden.

Besonders geeignet sind auch "alte" Kommunikationsendgeräte, deren Vertragslaufzeit mit einem Provider bereits abgelaufen ist - wie z.B. nach zwei Jahren - und/oder welche technisch oder funktional nicht mehr attraktiv sind. Sie können vorteilhaft zu einer kostengünstigen Überwachung von Objekten, wie z.B. einer Wohnung oder einer Ferienhauses, eingesetzt werden.

Ein "Brandmelder" auf einem derartigen Kommunikationsendgerät hat auch den Vorteil, dass z.B. in "unsicheren" Hotels, Motels oder Herbergen eine Minimalsicherheit gewährleistet wird. Gerade in derartigen Unterkunftsmöglichkeiten ist die Funktionsfähigkeit und Zuverlässigkeit von Brandmeldeanlagen oft zweifelhaft.

Besonders vorteilhaft ist es auch, dass die Digitalkamera eines solchen Smartphones neben dem für das Auge sichtbaren optischen Bereich auch den Nahinfrarotbereich erfasst, d.h. bis zu einer Wellenlänge von ca. 1000 nm. Gerade dieser spektrale Bereich ist für eine frühzeitige Entdeckung von Wärme und somit von offenem Feuer und von Rauch besonders gut geeignet.

Der Datenspeicher eines solchen Kommunikationsendgerätes ist typischerweise ein nichtflüchtiger Speicher, wie z.B. ein Flashspeicher oder eine Festplatte. Der Flashspeicher kann ein im Kommunikationsendgerät integrierter Halbleiterspeicher sein. Er kann alternativ oder zusätzlich ein externer Speicher sein, der durch eine in das Kommunikationsendgerät einsteckbare digitale Speicherkarte realisiert ist, wie z.B. durch eine SD Memory Card für "Secure Digital Memory Card".

Typischerweise verfügen derartige Kommunikationsendgeräte über einen Arbeitsspeicher (RAM), in dem zumindest Teile von Computerprogrammen, Betriebssystemroutinen, Applikationen sowie Bilder, Videos, Musikdaten und andere Daten durch den Prozessor aus dem Datenspeicher geladen und ausgeführt bzw. verarbeitet werden. Der Arbeitsspeicher kann nichtflüchtig oder flüchtig ausgeführt sein.

Eine Applikation - im Jargon auch kurz als "App" bezeichnet - und somit auch die erfindungsgemässe Brandmelder-Applikation ist ein Computerprogramm, d.h. eine Software, die durch den Prozessor im Kommunikationsendgerät ausgeführt werden kann. Es weist zudem Programmschritte auf, um über den Prozessor auf Peripheriegeräte des Kommunikationsendgerätes datentechnisch zugreifen zu können. Im Falle der Brandmelder-Applikation sind das zumindest die Digitalkamera und ggf. die digitale Frontkamera sowie eine der Ausgabeeinheiten, wie z.B. der Lautsprecher, die weissleuchtende LED, ein Vibrationsalarm oder eine Datenschnittstelle zur Ausgabe des Alarms.

Nach einer Ausführungsform der Erfindung weist die Brandmelder-Applikation geeignete Programmschritte auf, um durch Analyse charakteristischer modulierter Emissionen von offenem Feuer im Sinne eines Flammenmelders offenes Feuer zu detektieren. Dadurch lassen sich auf vorteilhafte Weise bekannte Analyseverfahren und Auswertealgorithmen von bekannten, zuverlässigen und schnell ansprechenden Flammenmeldern und die damit verbundene Funktionalität auf ein derartiges mobiles Kommunikationsendgerät übertragen.

Insbesondere weist die Brandmelder-Applikation geeignete Programmschritte auf, um die modulierten Emissionen von offenem Feuer hinsichtlich ihrer charakteristischen Flackerfrequenz und/oder ihres Farbspektrums zu analysieren.

Einer weiteren Ausführungsform zufolge weist die Brandmelder-Applikation geeignete Programmschritte auf, um mindestens einen sich bewegenden Bereich in den Videobilddaten durch Bestimmung der Richtung und der Grösse des sich bewegenden Bereichs auf das mögliche Vorliegen von Rauch abhängig von mindestens einer für Rauch charakteristischen Information zu analysieren. Dadurch lassen sich auf vorteilhafte Weise bekannte Analyseverfahren und Auswertealgorithmen von bekannten, zuverlässigen Videorauchmeldern und die damit verbundene Funktionalität auf ein derartiges mobiles Kommunikationsendgerät übertragen. Selbstverständlich können beide videobasierten Detektionsverfahren für offenes Feuer und Rauch parallel auf dem Prozessor ausgeführt werden, wie z.B. in zwei separaten Prozessen oder in zwei separaten Prozessorkernen.

Nach einer Ausführungsform weist das Kommunikationsendgerät ein Beleuchtungsmittel, insbesondere eine weissleuchtende LED auf, welche über den Prozessor zum zumindest kurzzeitigen Ausleuchten eines vor der Digitalkamera liegenden Erfassungsbereichs ansteuerbar ist. Zudem weist die Brandmelder-Applikation geeignete Programmschritte auf, um das Beleuchtungsmittel zumindest zeitweise einzuschalten. Dies ist z.B. bei Dunkelheit oder bei Dämmerung vorteilhaft, wenn die durchschnittliche Helligkeit im jeweiligen Videobild zu gering ist, so dass eine zuverlässige Videoanalyse nicht mehr möglich ist. Es werden dann nur die Videobilddaten von erfassten Videobildern ausgewertet, während dieser auch das Beleuchtungsmittel eingeschaltet ist. Es kann alternativ oder zusätzlich auch eine Differenz von Bildern, d.h. eines Videobildes mit Blitz minus eines Videobildes ohne Blitz, gebildet werden, um z.B. ein kontrastreiches Referenzbild zu ermitteln.

Die Brandmelder-Applikation kann auch geeignete Programmschritte aufweisen, um eine Hintergrundbeleuchtung des Touchscreen-Displays für die Ausleuchtung des Raumes einzuschalten. Sie kann auch Programmschritte aufweisen, um die Farbe des Touchscreen-Displays einzustellen, wie z.B. auf rot, grün, gelb oder blau. Denn bekanntermassen erlauben kurze Wellenlängen, wie z.B. bei blauem Licht, die Detektion von kleineren Partikeln, längere Wellenlängen dagegen, wie z.B. bei rotem oder dunkelrotem Licht, die Detektion von grösseren Partikeln. Weist die Brandmelder-Applikation hierzu geeignete Programmschritte auf, so ist durch rechnerisches Auswerten des Verhältnisses von blauem Streulicht zu rotem Streulicht bzw. umgekehrt, welches jeweils von den zu detektierenden Partikeln zu der Digitalkamera hingestreut wird, eine Partikelgrösse ermittelbar. Dadurch ist Indiz für das Vorliegen von Rauch mit kleiner Partikelgrösse von typischerweise deutlich weniger als 1 µm oder von Staub mit grosser Partikelgrösse von typischerweise deutlich mehr als 1 µm ermittelbar und ausgebbar.

Allgemein ist keine kontinuierliche Erfassung im Sinne eines Videofilms, das heisst mit einer Bildwiederholfrequenz von 24 Hz und mehr, für die videobasierte Brandüberwachung erforderlich. Die Bildwiederholfrequenz sollte jedoch für eine videobasierte Flammendetektion im Bereich von 10 bis 20 Hz liegen, um die typische Flackerfrequenz von ca. 6 Hz detektieren zu können. Es ist auch vorstellbar, dass die Erfassung der Videobilddaten mit einer ersten niedrigeren Bildwiederholfrequenz im Bereich von 1 Hz bis 10 Hz erfolgt und dass dann bei Detektion einer signifikanten Abweichung z.B. in zwei aufeinanderfolgenden Videobildern auf ein zweite höhere Bildwiederholfrequenz im Bereich von 24 Hz bis auf eine technisch maximal mögliche Bildwiederholfrequenz, wie z.B. von 50 Hz oder 100 Hz, umgeschaltet wird. Für eine videobasierte Rauchdetektion ist es jedoch ausreichend, wenn die Bildwiederholfrequenz im Bereich von wenigen Hertz liegt, wie z.B. zwischen 1 Hz bis 5 Hz, oder sogar darunter, wie z.B. zwischen 0,1 und 1 Hz.

Einer weiteren Ausführungsform zufolge weist das Kommunikationsendgerät eine Datenschnittstelle auf. Zudem ist das Kommunikationsendgerät dazu eingerichtet, Applikationen sowie die Brandmelder-Applikation über die Datenschnittstelle in den Datenspeicher zu laden. Dies kann z.B. über eine USB-Schnittstelle oder über eine Datenschnittstelle zum kabelgebundenen Anschliessen an einen externen Computer erfolgen.

Nach einer besonders vorteilhaften Ausführungsform ist im Datenspeicher ein Betriebssystem zum Betrieb des Kommunikationsendgerätes gespeichert, wie z.B. ein iOS-, ein Android- oder ein Windows Phone-Betriebssystem. Die Datenschnittstelle ist zum Online-Datenaustausch des Kommunikationsendgerätes mit dem Internet und/oder mit einem Intranet eingerichtet. Im Datenspeicher ist ein Applikation-Einkaufsprogramm gespeichert, wobei dieses Applikation-Einkaufsprogramm vorgesehen ist, Applikationen, d.h. "Apps" sowie die Brandmelder-Applikation von einem Online-Internet-Verkaufsportal für Computerprogramme über diese Datenschnittstelle zu laden.

Der besondere Vorteil ist, dass jedes internetfähige tragbare mobile Kommunikationsendgerät mit Kamera, d.h. prinzipiell jedes internetfähige Smartphone und Medienabspielgerät, durch Herunterladen und ggf. automatischem Installieren einer erfindungsgemässen Brandmelder-"App" auf denkbar einfache Weise zu einem Brandmelder "aufgerüstet" werden kann.

Die Brandmelder-Applikation kann nach dem Starten des Applikation-Einkaufsprogramms, wie z.B. des "App Store"-Programms der Fa. Apple auf einem iPhone oder des "Play Store"-Programms der Fa. Google für Kommunikationsendgerät mit dem Android-Betriebssystem, aus einem entsprechenden, zumeist gleichnamigen Online-Internet-Verkaufsportal über den Touchscreen ausgewählt und dann ggf. kostenpflichtig heruntergeladen werden. Nach einer automatischen Installation oder alternativ nach Aufforderung des Benutzers wird die Brandmelder-Applikation gestartet.

Vorzugsweise ist die Datenschnittstelle eine Funkdatenschnittstelle, insbesondere auf Basis eines Mobilfunk-, WLAN- und/oder Bluetooth-Standards. Der Mobilfunkstandard kann z.B. ein GSM-, UMTS-, CDMA- oder LTE-Standard sein. Insbesondere basiert die Funkdatenübertragung auf einem Internetprotokoll, wie z.B. auf TCP/IP.

Schliesslich betrifft die Erfindung eine von einem Online-Internet-Verkaufsportal für Computerprogramme herunterladbare und zum Ausführen auf einem derartigen tragbaren mobilen Kommunikationsendgerät bestimmte Brandmelder-Applikation, insbesondere zum Ausführen auf einem Smartphone oder auf einem Medienabspielgerät.

Eine derartige Brandmelder-Applikation kann auch geeignete Programmschritte aufweisen, die ein Einlernen des "Brandmelders" ermöglicht. Hierzu kann die Brandmelder-Applikation Programmschritte zum Anpassen der Digitalkamera an die Umgebungshelligkeit und/oder an den Umgebungskontrast aufweisen. Die Brandmelder-Applikation kann auch einen "Guide" oder "Wizard" aufweisen, welcher den Benutzer anleitet, eine geeignete Position zum Aufstellen des Kommunikationsendgerätes zu finden.

Die Brandmelder-Applikation kann auch geeignete Programmschritte aufweisen, um einen Testmodus durchzuführen. Somit kann die Wirksamkeit der Branderkennung z.B. dadurch überprüft werden, ob z.B. die Flamme eines vor der Digitalkamera angezündeten Feuerzeugs oder ob der Rauch einer Zigarette vor der Digitalkamera detektiert wird.

Die Erfindung sowie vorteilhafte Ausführungen der vorliegenden Erfindung werden am Beispiel der nachfolgenden Figuren erläutert. Dabei zeigt
- FIG 1: ein beispielhaftes Smartphone als tragbares mobiles Kommunikationsendgerät mit einer darauf ausgeführten Brandmelder-"App" gemäss der Erfindung,
- FIG 2: ein Blockschaltbild des Smartphone gemäss FIG 1 mit der in einem Datenspeicher gespeicherten Brandmelder-Applikation,
- FIG 3: eine Seitenansicht des Smartphones gemäss FIG 1 mit einer auf ein offenes Feuer ausgerichteten Digitalkamera und
- FIG 4: eine Seitenansicht des Smartphones gemäss FIG 1 mit einer auf Rauch ausgerichteten Digitalkamera.

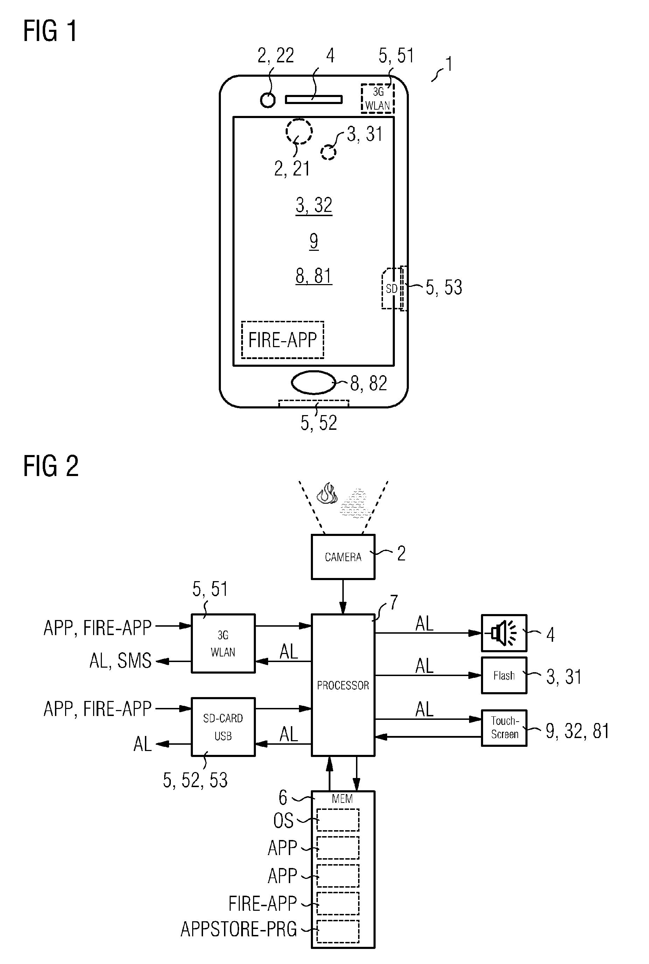

FIG 1 zeigt ein beispielhaftes Smartphone 1 als tragbares mobiles Kommunikationsendgerät mit einer darauf ausgeführten Brandmelder-"App" FIRE-APP gemäss der Erfindung. Das gezeigte Smartphone 1 weist an der dem Betrachter zugewandten Vorderseite ein berührungssensitives Display 9 auf, das auch als Touchscreen bezeichnet wird. Der Touchscreen weist eine berührungssensitive transparente Benutzereingabefläche 81 als Eingabeeinheit 8 und ein Display 32 als Ausgabeeinheit 3 auf. Im oberen Teil des Smartphones 1 ist mit dem Bezugszeichen 22 eine digitale Frontkamera gezeigt, welche insbesondere für die Videotelephonie vorgesehen ist. Mit dem Bezugszeichen 4 ist als Ausgabeeinheit ein Lautsprecher zur Sprachausgabe sowie zur Ausgabe von Ruf- oder Klingeltönen bezeichnet. Im unteren Teil ist eine Bedientaste 82 zu sehen.

An der Unterseite des gezeigten Smartphones 1 ist ferner eine Datenschnittstelle 52 als Ausgabeeinheit zu sehen, welche zum kabelgebundenen Anschliessen des Smartphones 1 an einen externen Computer vorgesehen ist. Diese kann auch zum Laden des Akkumulators und/oder zur dauerhaften Stromversorgung des Smartphones 1 eingerichtet sein, sodass dauerhaft und unterbrechungsfrei eine Brandüberwachung mittels des erfindungsgemässen Kommunikationsendgerätes möglich ist.

Im rechten Teil des gezeigten Smartphones 1 ist gestrichelt ein Einschub 53 zur Aufnahme eines digitalen Datenspeichers dargestellt. Im Beispiel der FIG 1 ist dies eine SD Memory Card. Im oberen rechten Teil des Smartphones 1 ist gestrichelt eine integrierte Funkdatenschnittstelle 51 als Ausgabeeinheit 5 gezeigt. Diese ist beispielhaft eine kombinierte Mobilfunk/WLAN-Funkdatenschnittstelle. Auf der Rückseite des gezeigten Smartphones 1 sind schliesslich eine Digitalkamera 21 bzw. Kamera 2 zur Aufnahme von Fotos und Videos mit einer im Vergleich zur Frontkamera 22 höheren Bild- und Videoqualität sowie eine weissleuchtende LED 31 als Ausgabeeinheit angeordnet. Sie kann im Sinne eines Fotoblitzes kurzzeitig angesteuert werden.

FIG 2 zeigt ein Blockschaltbild des beispielhaften Smartphones 1 gemäss FIG 1 mit der in einem Datenspeicher 6 gespeicherten Brandmelder-Applikation FIRE-APP. Zentrale Einheit ist ein Prozessor 7, wie z.B. ein A5-Prozessor der Fa. ARM. Er ist datentechnisch und/oder signaltechnisch mit der Kamera 2, mit der kombinierten Ein-/Ausgabeeinheit 9, also dem Touchscreen, mit dem LED-Blitz 31 für die Kamera 2, mit einer akustischen Ausgabeeinheit 4, mit der Datenschnittstelle 5 als Ausgabeeinheit und mit dem Datenspeicher 6 verbunden. Die gezeigte Datenschnittstelle 5 umfasst eine Funkdatenschnittstelle, welche im Beispiel auf dem 3G- und WLAN-Standard basiert, und zwei kontaktbehaftete Datenschnittstellen, wie eine USB- und SD Memory Card-Datenschnittstelle. Im als Block dargestellten Datenspeicher 6 sind Speicherblöcke gestrichelt eingezeichnet, welche jeweils einen gewissen Speicherplatz in dem Datenspeicher 6 belegen, wie z.B. 1 MByte. Mit OS ist der belegte Speicher für das jeweilige im Smartphone 1 verwendete Betriebssystem bezeichnet. Es ist typischerweise bereits werksseitig vorinstalliert. Mit APP sind zwei bereits dort im Datenspeicher 6 abgelegte Applikationen bezeichnet. Weiterhin ist eine Brandmelder-Applikation FIRE-APP als nächster Speicherblock im Datenspeicher 6 abgelegt. Schliesslich ist im Datenspeicher 6 noch ein Applikation-Einkaufsprogramm APPSTORE-PRG gespeichert. Auch dieses Programm APPSTORE-PRG ist typischerweise werksseitig vorinstalliert. Dieses Programm APPSTORE-PRG dient der Verwaltung der über ein Online-Verkaufsportal für Computerprogramme erworbenen und heruntergeladenen Applikationen, der sogenannten "Apps". Die gespeicherten Applikationen APP werden durch den Prozessor geladen und ausgeführt, zumeist auf eine Benutzeranforderung hin.

Erfindungsgemäss kann die im Datenspeicher 6 gespeicherte Brandmelder-Applikation FIRE-APP auf eine Benutzeranforderung hin vom Prozessor 7 geladen und ausgeführt werden. Dies kann durch Antippen eines entsprechenden Symbols, wie z.B. eines Flammensymbols auf dem Touchscreen, erfolgen. Das Kommunikationsendgerät wird somit zu einem erfindungsgemässen Kommunikationsendgerät in bzw. mit der Funktion eines Brandmelders.

Die Brandmelder-Applikation FIRE-APP weist hierbei geeignete Programmschritte auf, um die von der Kamera 2 erfassten Videobilddaten hinsichtlich zumindest einer für Feuer charakteristischen Information zu analysieren und bei Vorliegen derselben einen Alarm AL über die Ausgabeeinheit 3, 4, 5 auszugeben. Im gezeigten Beispiel kann der Alarm über die Lautsprechereinheit 4 akustisch, über die Blitz-LED 31, über das Display 32 des Touchscreen 9, als Textnachricht SMS über die Funkdatenschnittstelle 51 und/oder über einen an dem Smartphone 1 angeschlossenen Computer über die USB-Datenschnittstelle 52 erfolgen. Die Auswahl des Alarms kann z.B. in einem Konfigurationsmenü der Brandmelder-Applikation FIRE-APP eingestellt werden.

Gemäss der Erfindung ist Brandmelder-Applikation FIRE-APP eine von einem Online-Internet-Verkaufsportal für Computerprogramme herunterladbare und zum Ausführen auf einem tragbaren mobilen Kommunikationsendgerät, wie dem gezeigten Smartphone 1, bestimmte Applikation. Diese wird wie eine jede andere über ein Online-Internet-Verkaufsportal für Computerprogramme heruntergeladene "App" behandelt.

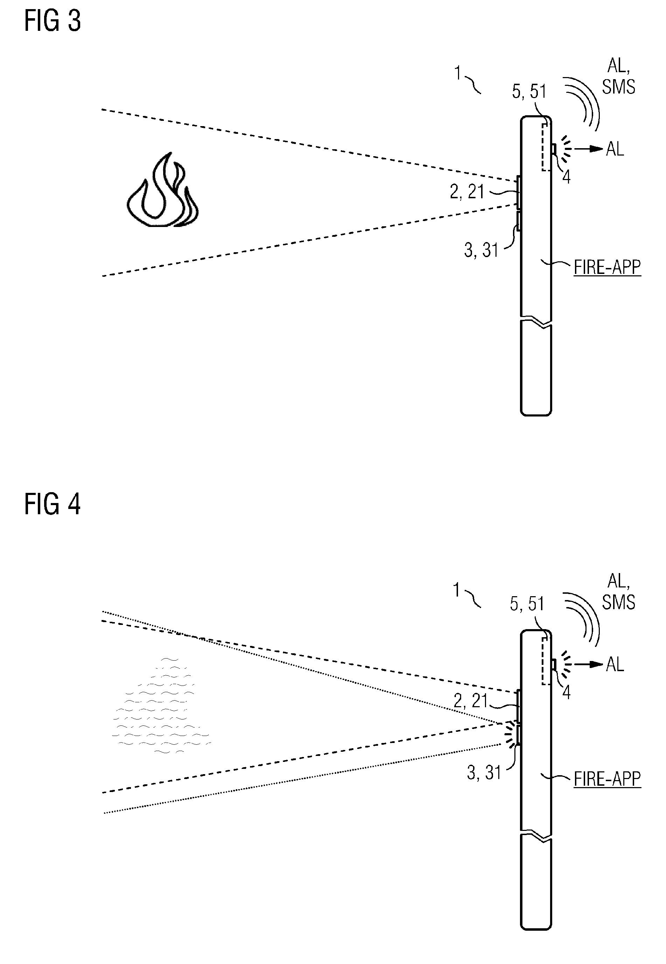

FIG 3 zeigt eine Seitenansicht des Smartphones 1 gemäss FIG 1 mit einer auf ein offenes Feuer ausgerichteten Kamera 2, 21. In diesem Fall erfolgt die Ausgabe des Alarms AL über eine SMS über die Funkdatenschnittstelle 51 und auf akustischem Wege über den Lautsprecher 4.

FIG 4 zeigt eine Seitenansicht des Smartphones gemäss FIG 1 mit einer auf Rauch ausgerichteten Kamera 2, 21. In diesem Fall wird zur Detektion von Rauch zumindest zeitweise eine Blitz-LED 31 aktiviert, um eine bessere Bildqualität zur Weiterverarbeitung der Videobilddaten von der Digitalkamera 22 auf das Vorhandensein von Rauch zu ermöglichen.

### Bezugzeichenliste

- 1: Tragbares mobiles Kommunikationsendgerät, Smartphone
- 2: Kamera, Videokamera, CMOS-Kamera
- 3: optische Ausgabeeinheit
- 4: akustische Ausgabeeinheit, Lautsprecher, Buzzer, Vibrationsalarm
- 5: Datenschnittstelle
- 6: Datenspeicher, nichtflüchtiger Datenspeicher, Flash-Speicher
- 7: Prozessor, Mikrocontroller, CPU
- 8: Eingabeeinheit für Benutzereingaben
- 9: Touchscreen, kombinierte Ein-/Ausgabeeinheit
- 21: Hauptkamera
- 22: Gesichtskamera
- 31: LED, weissleuchtende LED, Blitz-LED
- 32: Display, Touchscreen-Display
- 51: Funktdatenschnittstelle, 3G-Funktmodul, WLAN-Funkmodul, Bluetooth-Funkmodul
- 52: Datenschnittstelle zum kabelgebundenen Anschliessen an einen externen Computer
- 53: Einschub für digitalen Datenspeicher
- 81: berührungssensitive transparente Benutzereingabefläche
- 82: Eingabetaste

- AL: Alarm, Alarmmeldung
- APP: Applikation, App, Computerprogramm
- FIRE-APP: Brandmelder-Applikation
- OS: Betriebssystem
- SHOP-APP: Einkaufs-App, Einkaufs-Applikation
- SMS: Textmeldung, Textnachricht

## Patentansprüche

1. Tragbares mobiles Kommunikationsendgerät, insbesondere Smartphone oder Medienabspielgerät, mit einer Kamera (2), einer Ausgabeeinheit (3, 4, 5), einem nichtflüchtigen Datenspeicher (6) und einem damit verbundenen Prozessor (7), wobei der Datenspeicher (6) unter anderem zum Speichern von Applikationen (APP) vorgesehen ist, und wobei die Applikationen (APP) durch den Prozessor (7) geladen und ausgeführt werden, **dadurch gekennzeichnet,**
**dass** im Datenspeicher (6) eine Brandmelder-Applikation (FIRE-APP) gespeichert ist, welche auf eine Benutzeranforderung hin vom Prozessor (7) geladen und ausgeführt wird, und welche geeignete Programmschritte aufweist, um die von der Kamera (2) erfassten Videobilddaten hinsichtlich zumindest einer für Feuer charakteristischen Information zu analysieren und bei Vorliegen derselben einen Alarm (AL) über die Ausgabeeinheit (3, 4, 5) auszugeben.

2. Kommunikationsendgerät nach Anspruch 1, wobei die Brandmelder-Applikation (FIRE-APP) geeignete Programmschritte aufweist, um durch Analyse charakteristischer modulierter Emissionen von offenem Feuer im Sinne eines Flammenmelders offenes Feuer zu detektieren.

3. Kommunikationsendgerät nach Anspruch 2, wobei die Brandmelder-Applikation (FIRE-APP) geeignete Programmschritte aufweist, um die modulierten Emissionen von offenem Feuer hinsichtlich ihrer charakteristischen Flackerfrequenz und/oder ihres Farbspektrums zu analysieren.

4. Kommunikationsendgerät nach einem der vorherigen Ansprüche, wobei die Brandmelder-Applikation (FIRE-APP) geeignete Programmschritte aufweist, um mindestens einen sich bewegenden Bereich in den Videobilddaten durch Bestimmung der Richtung und der Grösse des sich bewegenden Bereichs auf das mögliche Vorliegen von Rauch abhängig von mindestens einer für Rauch charakteristischen Information zu analysieren.

5. Kommunikationsendgerät nach Anspruch 4, wobei das Kommunikationsendgerät ein Beleuchtungsmittel, insbesondere eine weissleuchtende LED (31) aufweist, welche über den Prozessor (7) zum zumindest kurzzeitigen Ausleuchten eines vor der Kamera (2) liegenden Erfassungsbereichs ansteuerbar ist, und wobei die Brandmelder-Applikation (FIRE-APP) geeignete Programmschritte aufweist, um das Beleuchtungsmittel (31) zumindest zeitweise einzuschalten.

6. Kommunikationsendgerät nach einem der vorherigen Ansprüche, wobei das Kommunikationsendgerät eine Datenschnittstelle (5) aufweist und dazu eingerichtet ist, Applikationen (APP) sowie die Brandmelder-Applikation (FIRE-APP) über die Datenschnittstelle (5) in den Datenspeicher (6) zu laden.

7. Kommunikationsendgerät nach Anspruch 6,
- wobei im Datenspeicher (6) ein Betriebssystem (OS) zum Betrieb des Kommunikationsendgerätes gespeichert ist,
- wobei die Datenschnittstelle (5) zum Online-Datenaustausch des Kommunikationsendgerätes mit dem Internet und/oder einem Intranet eingerichtet,
- wobei im Datenspeicher (6) ein Applikation-Einkaufsprogramm (APPSTORE-PRG) gespeichert ist, und
- wobei das Applikation-Einkaufsprogramm (APPSTORE-PRG) vorgesehen ist, Applikationen (APP) sowie die Brandmelder-Applikation (FIRE-APP) von einem Online-Internet-Verkaufsportal für Computerprogramme über diese Datenschnittstelle (5) zu laden.

8. Kommunikationsendgerät nach Anspruch 6 oder 7, wobei die Datenschnittstelle (5) eine Funkdatenschnittstelle ist, insbesondere auf Basis eines Mobilfunk-, WLAN- und/oder Bluetooth-Standards.

9. Kommunikationsendgerät nach einem der Ansprüche 6 bis 8, wobei das Betriebssystem (OS) ein iOS-, ein Android- oder ein Windows Phone-Betriebssystem ist.

10. Kommunikationsendgerät nach einem der vorherigen Ansprüche, wobei die Alarmmeldung (AL) auf optischem und/oder akustischem Wege ausgebbar ist.

11. Kommunikationsendgerät nach einem der vorherigen Ansprüche, wobei die Alarmmeldung (AL) über eine Datenschnittstelle (5), insbesondere als Textmeldung (SMS), ausgebbar ist.

12. Kommunikationsendgerät nach einem der vorherigen Ansprüche, wobei das Kommunikationsendgerät einen elektrisch ansteuerbaren Vibrationsalarm aufweist und wobei die Alarmmeldung (AL) über den Vibrationsalarm ausgebbar ist.

13. Eine von einem Online-Internet-Verkaufsportal für Computerprogramme herunterladbare und zum Ausführen auf einem tragbaren mobilen Kommunikationsendgerät (1) nach einem der vorherigen Ansprüche bestimmte Brandmelder-Applikation (FIRE-APP), insbesondere zum Ausführen auf einem Smartphone oder auf einem Medienabspielgerät.
